# EUROPÄISCHE PATENTANMELDUNG

(11) **EP 0 690 412 A2**
(43) Veröffentlichungstag der Anmeldung: **03.01.1996**
(21) Anmeldenummer: 95104895.8
(22) Anmeldetag: 01.04.1995
(51) Int. Cl.: G06T 7/20

(54) **Vorrichtung zum Erfassen von Hubschraubern**

(30) Priorität: 28.06.1994 DE 4423758
(71) Anmelder: Bodenseewerk Gerätetechnik GmbH, D-88662 Überlingen (DE)
(72) Erfinder: Dulat, Bernd, D-88662 Überlingen (DE)
(74) Vertreter: Weisse, Jürgen, Dipl.-Phys. Patentanwalt

(57) **Zusammenfassung**

Bei einer Vorrichtung zum Erfassen von Hubschraubern wird durch ein abbildendes optisches System (16) ein Bild eines beobachteten Gesichtsfeldes auf einem Bildsensor (14) erzeugt. Der Bildsensor (18) ist zur Erzeugung von zwei aus Bildelementen aufgebauten Bildmustern (32,34) eingerichtet, die dem Bild des Gesichtsfeldes in zwei aufeinanderfolgenden, durch ein kurzes Zeitintervall getrennten Zeitpunkten entsprechen. Die Bildmuster sind auf Bildverarbeitungsmittel aufgeschaltet, welche die Differenzen der Helligkeitswerte der einander entsprechenden Bildelemente bilden. Dabei liefern die Differenzsignale Bilder (36) der Rotorblätter eines von dem Bildsensor (18) erfaßten Hubschraubers.

## Beschreibung

Die Erfindung betrifft eine Vorrichtung zum Erfassen von Hubschraubern, bei welchem durch ein abbildendes optisches System ein Bild eines beobachteten Gesichtsfeldes auf einem Bildsensor erzeugt wird.

Es sind zielsuchende Flugkörper bekannt, die von einem Suchkopf zu einem Ziel geführt werden. Solche Suchköpfe sprechen im allgemeinen auf infrarote Strahlung an, die z.B. von den Triebwerken eines Flugzeugs emittiert wird. Sie geben Lenksignale an das Lenksystem des Flugkörpers derart, daß der Flugkörper auf das Ziel gelenkt wird. Es sind auch Suchköpfe bekannt, die mit einem Bildsensor arbeiten, welcher ein von einem abbildenden optischen System erzeugtes Bild eines Gesichtsfeldes durch eine Anordnung von Detektorelementen in einzelne Bildelemente auflöst. Die Helligkeitswerte der Bildelemente werden einer Bildverarbeitung unterworfen. Daraus werden dann die Lenksignale abgeleitet. Die Bildsensoren können dabei zweidimensionale Matrix-Detektoren sein. Die Bildsensoren können aber auch lineare Anordnungen von Detektorelementen aufweisen, welche durch eine Abtastbewegung das Gesichtsfeld abtasten.

Ein Flugzeug, das mit einem solchen zielsuchenden Flugkörper angegriffen wird, versucht, diesen Flugkörper durch Ausstoßen von Störzielen abzulenken. Solche Störziele erzeugen durch pyrotechnische Mittel eine starke infrarote Strahlung. Es kann dann geschehen, daß der Flugkörper, dessen Suchkopf auf infrarote Strahlung anspricht, dann nicht dem angegriffenen Flugzeug sondern dem Störziel folgt.

Hubschrauber fliegen häufig dicht über dem Gelände und vor einem sehr unruhigen und strukturierten Hintergrund. Hubschrauber sind daher häufig schwer zu erkennen. Das gilt auch für die Erkennung durch den Suchkopf von zielsuchenden Flugkörpern.

Der Erfindung liegt die Aufgabe zugrunde, eine Vorrichtung zum Erfassen von Hubschraubern zu schaffen, die den Hubschrauber auch vor einem stark strukturierten und infrarote Strahlung emittierenden Hintergrund zu erkennen gestattet.

Der Erfindung liegt weiter die Aufgabe zugrunde, eine Vorrichtung zum Erfassen von Hubschraubern zu schaffen, die nicht durch Störziele abgelenkt werden kann.

Erfindungsgemäß wird diese Aufgabe dadurch gelöst, daß
(a) der Bildsensor zur Erzeugung von zwei aus Bildelementen aufgebauten Bildmustern eingerichtet ist, die dem Bild des Gesichtsfeldes in zwei aufeinanderfolgenden, durch ein kurzes Zeitintervall getrennten Zeitpunkten entsprechen,
(b) die Bildmuster auf Bildverarbeitungsmittel aufgeschaltet sind, welche die Differenzen der Helligkeitswerte der einander entsprechenden Bildelemente bilden,
(c) wobei die Differenzsignale Bilder der Rotorblätter eines von dem Bildsensor erfaßten Hubschraubers liefern.

In den beiden zeitversetzt erhaltenen Bildmustern sind die Helligkeitswerte einander entsprechender Bildelemente des Hintergrundes im wesentlichen übereinstimmend. Bei der Bildung der Differenzen löschen sich diese Helligkeitswerte gegenseitig aus. Die Rotorblätter eines Hubschraubers haben sich aber in dem Zeitintervall zwischen der Erzeugun der beiden Bildmuster weitergedreht. An den Rotorblättern findet keine Auslöschung der Helligkeitswerte statt. Es werden daher bei der Differenzbildung Bildmuster erhalten, die nur noch die Rotorblätter zeigen. Diese bilden dann auch vor stark strukturiertem und infrarote Strahlung emittierenden Hintergrund ein deutlich erkennbares Ziel.

Die Vorrichtung nach der Erfindung ist auch unbeeinflußt von üblichen Störzielen ("Flares"). Die schnell umlaufenden Rotorblätter mit ihren großen Abmessungen sind auch praktisch nicht durch ein Störziel zu simulieren.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

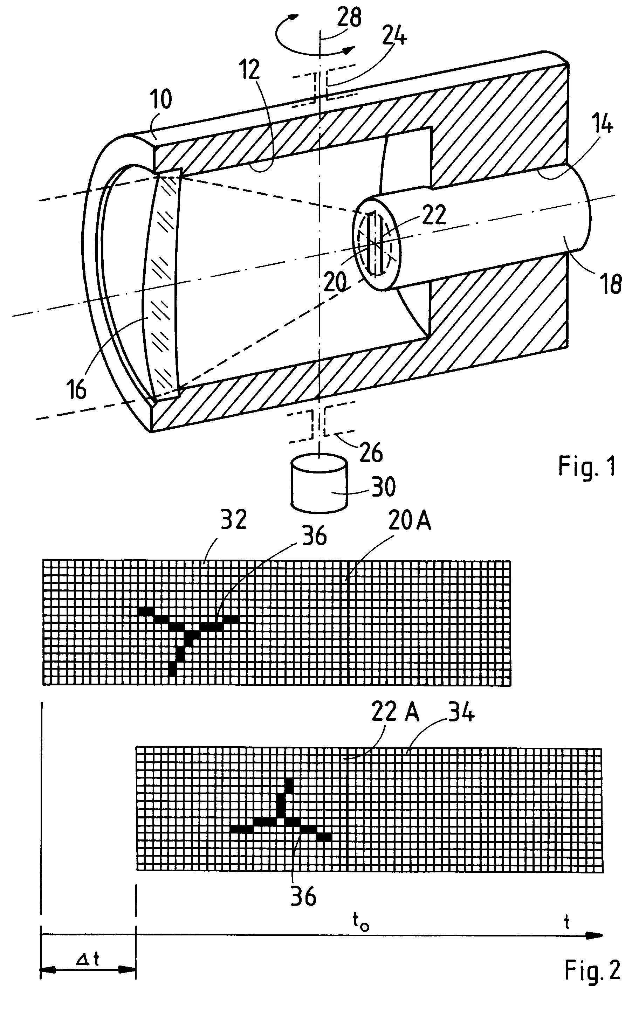

- Fig.1: zeigt eine schematisch-perspektivische Schnittansicht eines Bildsensors, der mit zwei parallelen, das Gesichtsfeld abtastenden Reihen von Detektorelementen zur Erzeugung von zwei aus Bildelementen aufgebauten Bildmustern eingerichtet ist, die dem Bild des Gesichtsfeldes in zwei aufeinanderfolgenden, durch ein kurzes Zeitintervall getrennten Zeitpunkten entsprechen.
- Fig.2: zeigt in Abhängigkeit von der Zeit die von jedem der beiden Reihen von Detektorelementen erfaßten Bildelemente nach der Differenzbildung mit den entsprechenden Bildelementen der jeweils anderen Reihe von Detektorelementen.

Mit 10 ist ein Sensorgehäuse von zylindrischer Grundform bezeichnet. Das Sensorgehäuse 10 weist eine Stufenbohrung mit einem weiten Abschnitt 12 und einem Abschnitt 14 von vermindertem Durchmesser auf. Der weite Abschnitt 12 der Stufenbohrung ist durch eine für infrarote Strahlung durchlässige Linse 16 abgeschlossen. In dem Abschnitt 14 der Stufenbohrung sitzt ein auf infrarote Strahlung ansprechender Sensor 18. An der Stirnfläche des Sensors 18 sind zwei zueinander parallele, im Abstand voneinander angeordnete Reihen 20 und 22 von Detektorelementen angeordnet. Die Linse 16 bildet ein im Unendlichen liegendes Gesichtsfeld auf die Ebene der beiden Reihen 20 und 22 von Detektorelementen ab. Das Sensorgehäuse 10 ist in Lagern 24 und 26 um eine Achse 28 drehbar gelagert. Durch einen Antrieb 30 wird das Sensorgehäuse 10 zur Abtastung des Gesichtsfeldes um die Achse 28 verdreht. Die Verdrehung kann eine durchgehende Drehung um 360° sein. Das ist der Fall, wenn die Vorrichtung als "Rundumsucher" verwendet wird, d.h. Hubschrauber erfassen soll, die aus irgendeiner beliebigen Richtung anfliegen können. Die Verdrehung kann aber auch eine hin- und hergehende Bewegung sein, wenn ein begrenztes Gesichtsfeld beobachtet wird. Das wäre beispielsweise bei der Anwendung der Vorrichtung in einem Suchkopf eines zielsuchenden Flugkörpers der Fall.

Die beiden Reihen 20 und 22 von Detektorelementen tasten das Gesichtsfeld zeitversetzt ab. Jeder Punkt des abgetasteten Gesichtsfeldes wird bei Drehung des Sensorgehäuses 10 im Uhrzeigersinn (von oben in Fig.1 gesehen) zuerst von einem Detektorelement der Reihe 20 und nach einem Zeitintervall t von einem Detektorelement der Reihe 22 erfaßt.

Der Sensor 18 enthält eine Bildverarbeitung. Zunächst ordnet die Bildverarbeitung jedem zu einem Zeitpunkt t gemessenen Signal eines Detektorelements der Reihe 22 ein Signal zu, das von dem in der gleichen "Höhe" liegenden Detektorelement der Reihe 20 zum Zeitpunkt t- t erzeugt wurde. Durch die Abtastbewegung werden durch die beiden Reihen 20 und 22 von Detektorelementen zwei das Gesichtsfeld darstellende Bildmuster erzeugt. Die beiden Bildmuster beruhen auf zwei Abtastbewegungen, die winkelversetzt und damit um das kurze Zeitintervall t zeitversetzt sind. Jedes Bildelement des einen Bildmusters ist einem Bildelement des zweiten Bildmusters zugeordnet.

Die Signale der Detektorelemente stellen Helligkeitswerte der von den Detektorelementen erfaßten Bildelemente dar. Die Signalverarbeitung bildet nun jeweils die Differenz der einander zugeordneten Signale. Innerhalb der kurzen Zeitspanne von t hat sich der Bildinhalt der Bildmuster, soweit er ruhende Objekte (Hintergrund) darstellt, praktisch nicht geändert. Bei der Differenzbildung heben sich die einander zugeordneten Signale der Detektorelemente auf. Der Hintergrund liefert daher näherungsweise keinen Bildinhalt der aus der Differenzbildung erhaltenen Bildmuster.

Anders ist es mit den Bildern der bewegten Rotorblätter eines beobachteten Hubschraubers. Diese haben sich in dem Zeitintervall, um das die zweite Abtastung der ersten Abtastung nacheilt, um einen Winkel weitergedreht. Die Rotorblätter von Hubschraubern laufen alle im wesentlichen mit der gleichen Drehzahl. Das ergibt sich aus aerodynamischen Gründen. An diese Drehzahl werden die Drehrate der Abtastung und das Zeitintervall angepaßt.

Fig.2 veranschaulicht die durch die Differenzbildung aus den Signalen der Detektorelemente der Reihen 20 und 22 erhaltenen Bildmuster.

Die Abszisse stellt die Zeit dar. Darüber sind die Bildelemente dargestellt, die bei der Abtastung von der Reihe 20 bzw. der Reihe 22 von Detektorelementen erhalten werden, jeweils unter Differenzbildung mit den entsprechenden Bildelementen des anderen Bildmusters. Das so von der Reihe 20 erhaltene Bildmuster ist in Fig.2 mit 32 bezeichnet. Das von der Reihe 22 erhaltene Bildmuster ist in Fig.2 mit 34 bezeichnet. Das Bildmuster 34 eilt dem Bildmuster 32 zeitlich um das Zeitintervall t nach. In beiden Bildmustern 32 und 34 sind die Rotorblätter 36 eines beobachteten Hubschraubers erkennbar. Der Hintergrund ist durch die Differenzbildung weitgehend eliminiert. Zu einem Zeitpunkt tₒ erfassen die Reihen 20 und 22 die in Fig.2 mit 20A bzw. 22A bezeichneten Reihen von Bildelementen. Bei der Abtastung durch die Reihe 20 liegt die Erfassung der Rotorblätter länger zurück als bei der Abtastung durch die Reihe 22 von Detektorelementen. In dem Zeitintervall t haben sich die Rotorblätter des Hubschraubers um einen Winkel entgegen dem Uhrzeigersinn in Fig.2 gedreht. Dadurch haben sich die Helligkeiten der zugehörigen Bildelemente bei der Differenzbildung auch nicht herausgehoben. Die Rotorblätter 36 bleiben bei der Bildverarbeitung sichtbar.

Das Zeitintervall ist so gewählt, daß der Hintergrund der Rotorblätter in den beiden Bildmustern 32,34 im wesentlichen gleich ist aber die Rotorblätter sich in dem Zeitintervall deutlich aus der Position des ersten Bildmusters (32) herausgedreht haben. Dabei kann das Zeitintervall kleiner als 0,02 Sekunden sein.

Bei einer praktischen Anwendung könnte folgende Auslegung gewählt werden:
Es werden zwei Reihen 20 und 22 von je 128 auf Lücke zueinander angeordneten Detektorelementen vorgesehen. Der Abstand der Detektorelemente einer Reihe 20 oder 22 voneinander beträgt -über die Brennweite der Linse 16 als Winkel ausgedrückt- 0,05°. Der Abstand der Reihen 20 und 22 von Detektorelementen beträgt -wieder über die Brennweite der Linse 16 als Winkel ausgedrückt- α=4°. Die Abtastgeschwindigkeit, also die Drehrate des Sensorgehäuses 10, beträgt 400°/sec. In diesem Fall ergibt sich als Zeitintervall, um das die Abtastung durch die Reihe 20 der Abtastung durch die Reihe 22 nacheilt, zu t = 0,01 sec. In dieser Zeit haben sich die Rotorblätter um 2,5 bis 3m bewegt.

Bei entsprechender thermischer Auflösung sind die Rotorblätter 36 dann von der Vorrichtung deutlich erkennbar.

## Patentansprüche

1. Vorrichtung zum Erfassen von Hubschraubern, bei welchem durch ein abbildendes optisches System (16) ein Bild eines beobachteten Gesichtsfeldes auf einem Bildsensor (14) erzeugt wird,
**dadurch gekennzeichnet, daß**
(a) der Bildsensor (18) zur Erzeugung von zwei aus Bildelementen aufgebauten Bildmustern (32,34) eingerichtet ist, die dem Bild des Gesichtsfeldes in zwei aufeinanderfolgenden, durch ein kurzes Zeitintervall getrennten Zeitpunkten entsprechen,
(b) die Bildmuster auf Bildverarbeitungsmittel aufgeschaltet sind, welche die Differenzen der Helligkeitswerte der einander entsprechenden Bildelemente bilden,
(c) wobei die Differenzsignale Bilder (36) der Rotorblätter eines von dem Bildsensor (18) erfaßten Hubschraubers liefern.

2. Vorrichtung nach Anspruch 1, **dadurch gekennzeichnet, daß** das Zeitintervall so gewählt ist, daß der Hintergrund der Rotorblätter in den beiden Bildmustern im wesentlichen gleich ist aber die Rotorblätter (36) sich in dem Zeitintervall deutlich aus der Position des ersten Bildmusters (32) herausgedreht haben.

3. Vorrichtung nach Anspruch 2, **dadurch gekennzeichnet, daß** das Zeitintervall kleiner als 0,02 Sekunden ist.

4. Vorrichtung nach Anspruch 3, **dadurch gekennzeichnet, daß** das Zeitintervall 0,01 Sekunden beträgt.

5. Vorrichtung nach einem der Ansprüche 1 bis 4, **dadurch gekennzeichnet, daß**
(a) der Bildsensor (18) ein Paar von zueinander parallelen, im Abstand voneinander angeordneten Reihen (20,22) von Detektorelementen aufweist und
(b) die Vorrichtung weiterhin Mittel (30) zur Erzeugung einer Abtastbewegung aufweist, durch welche das Gesichtsfeld von beiden Reihen (20,22) von Detektorelementen quer zur Längsrichtung dieser Reihen (20,22) abtastbar ist.

6. Vorrichtung nach Anspruch 5, **dadurch gekennzeichnet, daß** die Reihen (20,22) von Detektorelementen in einem Gehäuse (10) angeordnet sind, das durch eine das abbildende optische System bildende Linse (16) abgeschlossen ist und als Abtastbewegung eine Schwenkbewegung ausführt.

7. Vorrichtung nach einem der Ansprüche 1 bis 6, **dadurch gekennzeichnet, daß** die Detektorelemente auf infrarote Strahlung ansprechen.

8. Vorrichtung nach einem der Ansprüche 1 bis 7, **dadurch gekennzeichnet, daß** sie einen Teil eines Suchkopfes eines zielsuchenden Flugkörpers bildet.
